# EUROPEAN PATENT SPECIFICATION

(11) **EP 1 188 599 B1**
(45) Date of publication and mention of the grant of the patent: **21.04.2004**
(21) Application number: 01117185.7
(22) Date of filing: 16.07.2001
(51) Int. Cl.: B60K 37/00

(54) **Dashboard assembly for motor-vehicle**
Armaturenbrettanordnung für ein Kraftfahrzeug
Ensemble de tableau de bord pour automobile

(30) Priority: 18.09.2000 IT PN000030 U
(43) Date of publication of application: 20.03.2002
(73) Proprietor: Plastal S.p.A., 33170 Pordenone (IT)
(72) Inventor: Rubinato, Simone, 31043 Fontanelle, Treviso (IT); Bonardi, Alberto, 25125 Brescia (IT)
(74) Representative: Giugni, Valter

(56) References cited:
- DE-A- 3 806 783
- FR-A- 2 729 913
- US-A- 5 762 395

## Description

The present invention refers to an improved instrument-carrying dashboard structure for the driver compartment of a motor-vehicle, comprising an appropriately shaped outer body and an inner duct for the heating/cooling air for the passenger compartment of the vehicle to pass therethrough.

Motor-vehicle dashboards are currently manufactured with the use of plastic materials which are injection-moulded or thermoformed, and which have differing values as far as mechanical strength and heat resistance are concerned. The duct provided for the heating/cooling air for the passenger compartment of the vehicle to pass therethrough is manufactured in a similar manner in the form of a hollow shell that is then welded or bonded to the inner side of the dashboard body. As a result, the body of the dashboard practically constitutes a complementary part of the heating/cooling air duct.

DE 38 06 783, on which the preamble of claim 1 is based, discloses an instrument panel taking the form of a dashboard or the like for motor vehicles is described, which is essentially comprised of two shell-like moulded parts which are connected to one another and enclose an air conduction channel. On at least parts of the visible shaped part there is arranged a decorative layer which is foamed at the rear. The connections between the two shaped parts are brought about by means of special chambers into which foam is inserted which has long-lasting adhesive and/or bonding properties.

The manufacture of dashboards of the currently available type therefore requires, further to the plastic moulding or forming presses, also considerable tooling and equipment for welding, since the parts to be joined together are definitely large-sized. The same applies to bonding, owing to the need for special adhesives or glues to be used, which must furthermore be applied with the use of appropriate means. In both cases, therefore, manufacturing turns out to be rather time-consuming and difficult to carry out. Furthermore, the resulting dashboard assembly turns out to have a rather rigid structure, while no desirable freedom in the configuration of the heating/cooling air ducts is actually allowed for.

It therefore is a main purpose of the present invention to provide a dashboard assembly for the driver/passenger compartment of a motor-vehicle, in which the duct for the heating/cooling air to pass therethrough allows a maximum extent of design freedom, while reducing air-pressure losses, flow resistance and operating noise in general.

According to the present invention, this aim is reached in a dashboard assembly in which the internal duct is in a single-piece construction made by blow moulding separately from the outer body of the dashboard and is attached to the latter by means of mechanical fastening elements, in such a manner as to enable the dashboard and the duct to constitute a mutually supporting structure, as this is recited in the appended claims.

Advantages and features of the present invention will anyway be more readily and clearly understood from the description that is given below by way of nonlimiting example with reference to the accompanying drawings, in which:
- Figure 1 is a schematical, partially cross-sectional longitudinal view of a dashboard according to the present invention; and
- Figure 2 is a schematical cross-sectional view of the dashboard illustrated in Figure 1.

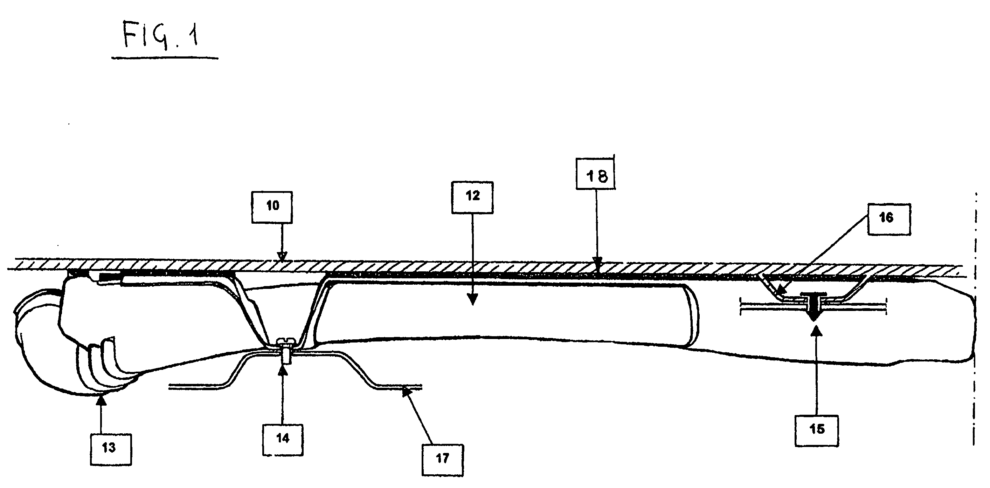

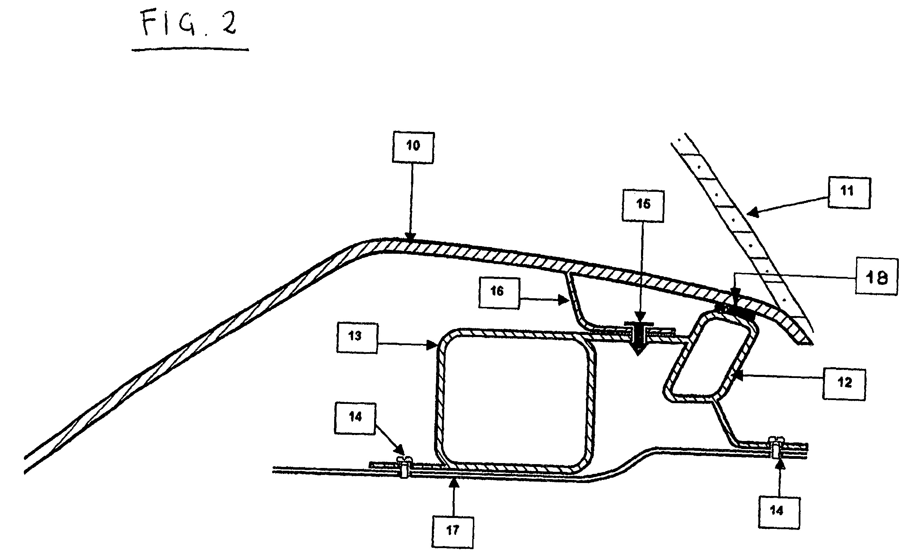

In Figures 1 and 2, the structure of the dashboard 10 is shown partially and in a cross-sectional view. It therefore should be normally intended as extending all over the entire front side of the driver/passenger compartment of the motor-vehicle. The dashboard 10 ends frontally in contact, ie. against the windshield 11, as this is shown in Figure 2.

Under the dashboard 10, and substantially over the whole length thereof, there are extending the ducts 12 and 13 provided for the heating/cooling air for the interior of the passenger compartment of the vehicle to pass therethrough.

According to the present invention, the ducts 12 and 13 are provided out of a single piece made by blow moulding separately from the actual structure of the dashboard. The connection between the ducts 12 and 13 and the dashboard 10 is made mechanically by means of various fastening elements.

Two types of fastening elements, and namely the screws 14 and the snap-fitting studs 15, are illustrated in Figures 1 and 2. These fastening means enable the ducts 12 and 13 to be on the one side connected to a bracket 16 which is provided protrudingly on the inner side of the dashboard 10 and, on the other side, to be connected to another bracket 17 which is in turn fastened on to a structural member of the vehicle body, such as for instance a front stanchion or the like (not shown).

As shown in the Figures, the ducts 12 and 13 are moulded integrally with appropriate plane tabs that are adapted to easily conjugate themselves with the brackets 16 and 17, thereby forming the surfaces for the fastening elements 14 and 15 to be applied thereto.

At least an elastic gasket 18, which enables possibly occurring slacks between the mutually contacting surfaces to be taken up, is then usually placed between the dashboard 10 and the ducts 12, 13.

The described solution enables the pre-set aims to be fully reached. In fact, moulding the dashboard and the ducts as separate pieces considerably simplifies the means and the process used to produce these parts. Furthermore, the ducts can be made to the most appropriate shape and form, thereby also reducing air-pressure losses or flow resistances in the interior thereof and, as a result, improving their performance profile in terms of low flow noise. Finally, fastening the heating/cooling air ducts to the dashboard on the one side and to structural parts of the vehicle body on the other side creates a mutually supporting structure for both the dashboard and the ducts, which therefore contributes to a greater strength of the whole front side of the driver/passenger compartment of the motor-vehicle.

It will of course be appreciated that the fastening means that have been indicated hitherto in this description may well be replaced by equivalent means that use the same innovative concept and enable the same useful effect to be reached. For instance, the screws 14 and the snap-fitting studs 15 may be replaced by felt elements or structural adhesives.

## Claims

1. Dashboard assembly for the driver/passenger compartment of a motor-vehicle, comprising a shaped outer body and at least one inner duct for the heating/cooling air for the passenger compartment of the vehicle to pass therethrough, said at least one inner durt (12, 13) being moulded separately from the outer body of the dashboard (10) and is joined to the latter by means of mechanical fastening elements (14, 15), so that the dashboard and the duct constitute a mutually supporting structure, **characterized in that** said at least one inner duct (12, 13) is in a single-piece construction made by blow moulding.

2. Dashboard assembly according to claim 1, **characterized in that** said at least an inner duct (12, 13) is blow moulded integrally with appropriate tabs forming surfaces for said fastening elements (14, 15) to be applied thereto.

3. Dashboard assembly according to claim 1 or 2, **characterized in that** said fastening elements (14, 15) are screw-like elements.

4. Dashboard assembly according to claim 1 or 2, **characterized in that** said fastening elements (14, 15) are snap-fitting studs.

5. Dashboard assembly according to claim 1 or 2, **characterized in that** said fastening elements (14, 15) are felt elements.

6. Dashboard assembly according to claim 1 or 2, **characterized in that** said fastening elements (14, 15) are structural adhesives.

## Patentansprüche

1. Armaturenbrettanordnung für den Fahrer-/Fahrgastraum eines Kraftfahrzeugs, die einen geformten äußeren Körper und wenigstens eine innere Leitung umfasst, durch die die Heiz-/Kühlluft für den Fahrgastraum des Fahrzeugs hindurchtritt, wobei die wenigstens eine innere Leitung (12, 13) separat von dem äußeren Körper des Armaturenbretts (10) geformt ist und mit letzterem mittels mechanischer Befestigungselemente (14, 15) so verbunden ist, dass das Armaturenbrett und die Leitung eine Struktur bilden, in der sie einander halten, **dadurch gekennzeichnet, dass** die wenigstens eine innere Leitung (12, 13) eine aus einem Stück bestehende Konstruktion ist, die durch Blasformen hergestellt wird.

2. Armaturenbrettanordnung nach Anspruch 1, **dadurch gekennzeichnet, dass** die wenigstens eine innere Leitung (12, 13) integral mit entsprechenden Vorsprüngen blasgeformt wird, die Flächen aufweisen, an denen die Befestigungselemente (14, 15) angebracht werden.

3. Armaturenbrettanordnung nach Anspruch 1 oder 2, **dadurch gekennzeichnet, dass** die Befestigungselemente (14, 15) schraubenartige Elemente sind.

4. Armaturenbrettanordnung nach Anspruch 1 oder 2, **dadurch gekennzeichnet, dass** die Befestigungselemente (14, 15) Einschnappbolzen sind.

5. Armaturenbrettanordnung nach Anspruch 1 oder 2, **dadurch gekennzeichnet, dass** die Befestigungselemente (14, 15) Filzelemente sind.

6. Armaturenbrettanordnung nach Anspruch 1 oder 2, **dadurch gekennzeichnet, dass** die Befestigungselemente (14, 15) Montagekleber sind.

## Revendications

1. Ensemble de tableau de bord pour la cabine du conducteur/passagers d'un véhicule automobile, comprenant un corps extérieur façonné et au moins un conduit intérieur pour le passage de l'air de chauffage/refroidissement de la cabine de passagers du véhicule, ledit au moins un conduit intérieur (12, 13) étant formé par moulage séparément dudit corps extérieur du tableau de bord (10) et étant attaché à ce dernier au moyen d'éléments de fixation mécaniques (14, 15), de façon telle que le tableau de bord et le conduit constituent une structure de support mutuel, **caractérisé en ce que** ledit au moins un conduit intérieur (12, 13) est formé par une seule pièce qui est moulée par soufflage.

2. Ensemble de tableau de bord selon la revendication 1, **caractérisé en ce que** ledit au moins un conduit intérieur (12, 13) est moulé par soufflage intégralement avec des ailettes saillantes appropriées présentant des surfaces auxquelles lesdits éléments de fixation mécaniques (14, 15) sont appliqués.

3. Ensemble de tableau de bord selon la revendication 1 ou 2, **caractérisé en ce que** lesdits éléments mécaniques de fixation (14, 15) sont des éléments à vis.

4. Ensemble de tableau de bord selon la revendication 1 ou 2, **caractérisé en ce que** lesdits éléments mécaniques de fixation (14, 15) sont des goujons s'engageant par pression.

5. Ensemble de tableau de bord selon la revendication 1 ou 2, **caractérisé en ce que** lesdits éléments mécaniques de fixation (14, 15) sont des éléments en feutre.

6. Ensemble de tableau de bord selon la revendication 1 ou 2, **caractérisé en ce que** lesdits éléments mécaniques de fixation (14, 15) sont des adhésifs structuraux.
